# EUROPEAN PATENT SPECIFICATION

(11) **EP 4 581 362 B1**
(45) Date of publication and mention of the grant of the patent: **07.10.2026**
(21) Application number: 23789720.2
(22) Date of filing: 04.09.2023
(51) Int. Cl.: G01N 30/72, G01N 27/447, H01J 49/16

(54) **COAXIAL FLOW REACTION INTERFACE**
KOAXIALFLUSSREAKTIONSSCHNITTSTELLE
INTERFACE DE RÉACTION À ÉCOULEMENT COAXIAL

(30) Priority: 03.09.2022 US 202263403718 P; 01.09.2023 HU 2300292
(43) Date of publication of application: 09.07.2025
(73) Proprietor: Captec Medical KFT., 8200 Veszprém (HU)
(72) Inventor: SÁRKÖZY, Dániel, 8066 Pusztavám (HU); GUTTMAN, András, San Diego, California CA92130 (US)
(74) Representative: Danubia Patent & Law Office LLC
(86) International application number: PCT/HU2023/050053
(87) International publication number: WO 2024/047371

(56) References cited:
- US-A- 5 993 633
- US-A1- 2020 234 940
- US-B2- 11 342 173
- US-B2- 8 674 294

## Description

### Field of the invention

The present invention falls into the field of novel analytical techniques. In particular, the present invention provides a connection of liquid-phase microseparation methods to mass spectrometric detection of general nature and/or design, especially for capillary gel electrophoresis analysis of proteins and peptides including SDS-protein complexes.

### Background of the invention

Capillary electrophoresis (CE) coupled with mass spectrometry (MS) is a unique combination of a high performance liquid phase separation technique and a special detection method, providing excellent selectivity and high sensitivity. CE coupled with MS is described in US-B2-11342173.

CE is a separation technique that utilizes the charge-to-hydrodynamic volume ratio of the analyte molecules for separation under the influence of an external electrical field. CE is a highly selective separation method, which requires small sample volumes and offers short analysis times with high efficiency and relatively low running cost. In the CE-MS coupled technique, the mass spectrometer provides a second separation dimension that further fractionates the incoming samples by their mass-to-charge ratio in the gas phase and finally acts as detector. From the viewpoint of fluid (sample) flow, the output of the CE separation is the input of the MS detection. In bioanalytical applications, where the sample usually contains sensitive molecules with large molecular masses, the most widely used soft ionization method of LC- and CE-MS coupling is electrospray ionization (ESI). However, online coupling of CE with ESI-MS is not a straightforward task due to their different electric current levels.

Capillary electrophoresis (CE) is one of the frequently used liquid phase separation methods for the analysis of peptides and proteins, mostly utilizing UV or fluorescent detection both in zone and gel electrophoresis modes [1-3]. Hyphenation of CE with electrospray ionization mass spectrometry (ESI-MS), however, provides additional structural information about the separated sample components [4-6]. In the past decades, various CE-MS interfaces have been developed including sheath flow [7], sheathless [8] and liquid junction [9] based approaches. Sheath flow CE nano ESI-MS interfaces, while supporting stable electrospray, somewhat dilute the analytes prior to entrance into the MS. Sheathless interfaces do not dilute the samples [10], but their fabrication requires delicate manipulation of miniaturized components [11] and may have intermittent spray stability issues. In the liquid junction interface, a liquid reservoir is surrounding the separation and transfer capillaries providing electric contact for the CE and MS circles [12], typically driven by an applied positive [13] or negative [14] pressure.

Over the past decade, there have been many attempts to improve CE-MS coupling with highly competitive features [15, 16], however, most of them still have challenging issues, such as accommodating the option to use gel filled capillaries and non-MS friendly buffer components, such as sodium dodecyl sulfate. SDS is a strong detergent that is widely used in proteomic studies for solubilization or extraction of hydrophobic or aggregated proteins and size-based separation of proteins by SDS-polyacrylamide gel electrophoresis. However, The SDS concentration has to be reduced prior to ESI-MS. The presence of SDS can cause ion suppression in ESI-MS and the appearance of strong SDS related signals. To achieve better spectra in ESI-MS analysis, SDS removal is required. The development of SDS removal methods prior to ESI-MS analysis has become an important and active research area in proteomics. These methods include solid phase extraction, filter aided sample preparation, electrofiltration, etc. The article [31] disclose a method where gamma cyclodextrin (γ-CD) was used for the removal of SDS before ESI-MS. However, the prior art does not disclose any method for the removal of SDS in a direct one-dimensional online coupled CE-MS system.

Other problems are the maintenance of the stable electrospray process [17], formation of bubbles during CE separation [18] and preserving the electrical contact [19], all seem to be recurring complications in CE-MS hyphenation. In addition, in most interfaces, specific modifications are required to the separation capillary such as drilling [20], sharpening and etching [21], or other labor-intensive and not easily reproducible alterations. Accurate positioning of the fused silica capillary into an outer sprayer tip is of also high importance [22] and a two- dimensional setting was recently introduced to accommodate the connection of different separation principles before MS detection [23].

All the above mentioned connection types can be used for CE-MS, but the electrospray interface with a coaxial liquid sheath flow arrangement is very often selected because of its robustness. In this setup, there is a makeup flow (sheath liquid) at the outlet end of the separation capillary providing electrical contact closure with the background electrolyte inside the separation capillary and simultaneously aiding the electrospray ionization process [24-26]. Using a nano-source with liquid sheath flow systems usually does not utilize nebulizer gas, making the desolvation and ionization processes less efficient. To address this issue, users typically fine tune the following parameters to achieve a stable electrospray: 1) adjust the distance between the sprayer tip and the MS orifice, 2) optimize the electrospray voltage and 3) vary the flow rate of the sheath liquid. Finding the right distance between the sprayer tip and the orifice is quite challenging, because reducing the gap can cause corona discharges that might damage the MS instrument [27]. This may also represent a problem when too high electrospray voltage is applied, in addition to possible in-source fragmentation issues [28]. Regarding the sheath liquid stream, extremely low flow rates may result in faltering spray formation, while too high flow rates cause droplet formation. Therefore, operating commercial (i.e., factory developed and optimized) ESI sources for CE-MS with the option to use heated nebulizer gas would make optimization significantly easier, also assuring stable electrospray even at lower (~1500 V) spray voltages.

Thus, in light of the above, an online CE-MS coupling, preferably SDS-CGE-MS coupling would be of great interest. A general object of the present invention is to provide such a device.

### Summary of the invention

One aspect of the present invention, thus, resides in a novel instrument based on the online coupling of CE with MS through coaxial sheath flow reactor interfacing.

To address the above-mentioned issues and further improve the versatility and robustness of CE-MS couplings, our group has developed a new approach by implementing a Coaxial Flow Reactor Interface (CFRI). In this setting, the sample transport from the separation capillary to the actual factory designed ESI source is based on a different principle. While the electric contact closure still takes place inside the coaxial sheath liquid mixing section of the interface part, the separated sample components are carried towards the ESI source by the sheath flow through a closed-circuit narrow bore flow reactor tube. This approach enables to use the original factory designed ESI sources for any MS system connected to the CE unit. In addition, this novel design opens the possibility for using gel filled capillaries, even with non-MS friendly buffer components such as SDS, as the addition of the flow reactor tube readily accommodates (online) post column reactions prior to MS detection, such as inclusion complexation, adsorption, chemical reaction, etc.

Accordingly, a coupled CE-MS apparatus is disclosed herein, wherein the apparatus comprises
- a device for performing capillary electrophoresis of a sample,
   said device having a separation capillary of a given length and with an end portion distant to the device, forming an outlet of the device
- a mass spectrometer equipped with an electrospray ionization source forming an inlet of the mass spectrometer
wherein the separation capillary and the electrospray ionization source define a contiguous flow path for the sample to be separated and analyzed by the mass spectrometer;
the apparatus further comprising
- a sheath flow device arranged in said flow path and extending along at least a portion of the length of the separation capillary, said sheath flow device being configured to introduce a sheath fluid into the flow path at the end portion of said separation capillary;
- a flow reactor arranged in said flow path downstream of the sheath flow device and upstream of the electrospray ionization source, said flow reactor being configured to accommodate a reaction between at least one component of said sheath fluid and at least one component exiting the outlet end portion of the separation capillary.

In an embodiment of the invention the capillary electrophoresis is capillary gel electrophoresis, capillary zone electrophoresis, capillary isoelectric focusing, capillary isotachophoresis and capillary electrochromatography, preferably capillary gel electrophoresis. In case of capillary gel electrophoresis the components exit the outlet end portion of the separation capillary are in the form of ions. In the other cases, the components exit the capillary into the sheath fluid.

There is no particular restriction regarding the separation capillary, it depends on the molecules to be separated. In an embodiment of the invention, the separation capillary is commercially available.

In another embodiment of the invention the sheath fluid is a multicomponent fluid.

In another embodiment of the invention the sheath flow device is a coaxial sheath flow device. Coaxial sheath flow devices are commercially available.

In another embodiment of the invention the flow reactor is a narrow bore flow reactor tube, preferably a bare fused silica capillary. The capillary volume of the flow reactor is at least 100 nl, preferably at least 500 nl, more preferably at least 1000 nl. Said capillary volume of the flow reactor depends on the amount of said component to be reacted and the reaction speed, i.e. the capillary volume must be high enough to complete the reaction before entering the MS. However, increasing the volume leads to peak broadening, therefore the skilled person has to find an optimum volume. The flow reactor is 1-30 cm, preferably 2-20 cm, more preferably 5-10 cm long capillary with 30-250 µm, preferably 100-200 µm internal diameter. In an embodiment the flow reactor is an 8 cm long, 200 µm i.d. / 365 µm o.d. bare fused silica capillary.

The flow reactor is also referred to as flow reactor section or flow reactor zone.

The flow reactor is connected to the separation capillary through a non-conductive, preferably flexible tubing which is preferably PEEK tubing. The separation capillary and the flow reactor are arranged in the connection tubing to provide a closed-circuit connection. Said arrangement also defines a contact volume in the connection where the components exiting the outlet end portion of the separation capillary meet and first contact with the sheath fluid before they enter the flow reactor. The distance between the separation capillary and the flow reactor (i.e. the length of the contact volume) must be appropriate to contribute the decoupling of the electric circuit from the MS, usually about 0.05 mm and smaller than 0.1 mm to decrease the dead-volume induced band broadening. The flow reactor contacts only with the non-conductive tubing, not with the separation capillary.

The outlet of the flow reactor is connected to the electrospray ionization source of the mass spectrometer. The contiguous flow path therefore includes the separation capillary, the contact volume, the flow reactor and the electrospray ionization source, in this given order, which corresponds to the direction of flow in the system.

The part of the apparatus comprising the sheath flow device extending along at least a portion of the length of the separation capillary and said portion of the length of the separation capillary, the flow reactor and the connection between them (and also the contact volume) is referred to as Coaxial Flow Reactor Interface (CFRI) in the present disclosure.

The arrangement above allows efficient decoupling of the electric circuit from the mass spectrometer, i.e., no current flow from the CE into the MS and vice-versa, enabling stable electrospray formation apparently independent of the capillary electrophoretic circuit of the system. The CFRI connection did not require any microfabrication and specially modified (i.e., etched, sharpened, etc.) capillaries, as a matter of fact, a conventional blunt edge, rugged fused silica capillary can be simply attached and detached to and from any commercial ESI sources through the flow reactor within a matter of minutes. This easy CE-MS coupling option allows the use of any commercial ESI sources originally developed and optimized for the actual mass spectrometer used with no modification requirements.

Another aspect of the present invention resides in a process for separating and analyzing components of a sample, preferably peptides and/or proteins in CE-MS, more preferably CGE-MS, the process comprising separating said components in a separation capillary of a capillary electrophoresis device, contacting the components exiting the separation capillary with a sheath fluid in a contact volume, then introducing said components together with the sheath fluid into the MS via a flow reactor, wherein the flow reactor is connected to the separation capillary through a non-conductive tubing, and the electric circuit of the CE is appropriately decoupled from the electric circuit of the MS.

The terms "components" and "chemical compounds" are used interchangeably in the present description.

In a preferred embodiment the process is performed in the apparatus of the invention.

In an embodiment of the invention the sheath fluid is a multicomponent fluid.

In an embodiment of the process, in addition to the target components, other components of the sample may also exit the end portion of the separation capillary. Some of these components might be harmful or not desired for MS analysis. In that embodiment, the process comprises contacting the component exiting the outlet end portion of the separation capillary with at least one other component of said sheath fluid thereby performing a sample preparation step for the MS analysis. In that case said contacting is followed by a reaction between the component eluting from the separation capillary and the component of the sheath fluid, such as inclusion complexation, adsorption, chemical reaction, etc. The component exiting the outlet end portion of the separation capillary meets and contacts with the sheath fluid in the contact volume. The components (from the sheath fluid and from the separation capillary) together pass through the flow reactor in a continuously flowing stream, thereby a reaction takes place. During said reaction or sample preparation step, the component which is harmful or not desired for MS analysis, is deactivated/eliminated/transformed, and thus it does not disturb the MS analysis.

In certain cases, a not desired component from a gel or a buffer used in the CE may exit the separation capillary.

In an embodiment of the invention the contacting of the components includes inclusion complexation. In a preferred embodiment of the invention, the capillary electrophoresis is capillary gel electrophoresis, the at least one component exiting the outlet end portion of the separation capillary is SDS and the at least one component of said sheath fluid is γ-CD, and the reaction between these components forms an SDS-γ-CD inclusion complex. In sodium dodecyl sulfate capillary agarose gel electrophoresis mode (where both the sample and the gel may contain SDS), addition of gamma cyclodextrin to the sheath liquid in the Coaxial Flow Reactor Interface efficiently removes the SDS content of the sample and the background electrolyte by inclusion complexation, while maintaining good separation efficiency and decreased ion suppression detection with high sensitivity. This was previously not possible with a direct online connection. The concentration of the γ-CD in the sheath liquid is 0,01-20 %, preferably 0,1-5 %, more preferably 0,8-2 % (weight/volume %). The composition of the sheath fluid is otherwise not restricted, the skilled person can choose the appropriate buffer components.

In another embodiment of the invention the contacting of the component includes a chemical reaction. An alternative embodiment of the invention is permethylation of sugars to enhance ionization efficiency in the MS

### Brief description of the drawings

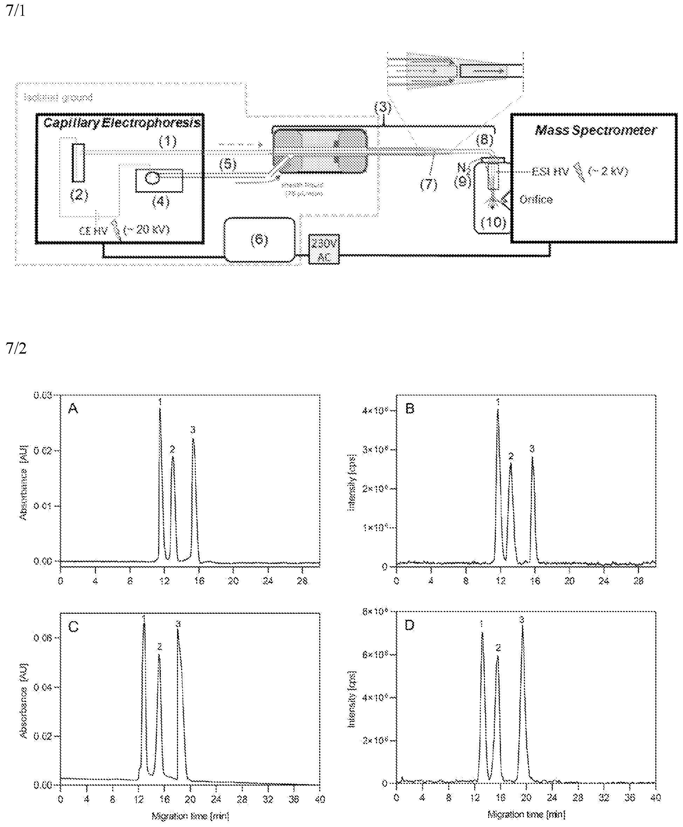

Figure 1: Schematic drawing of the apparatus according to the invention.
Figure 2: Capillary zone electrophoresis analysis of a peptide and a protein mixture with UV (214 nm, Panels A and C) and CZE-CFRI-ESI-MS (Total Ion Electropherogram, TIE, Panels B and D) detection. Peaks: Peptides - Panels A and B: (1) bradykinin; (2) angiotensin II and (3) neurotensin. Proteins - Panels C and D: (1) lysozyme, (2) ribonuclease A and (3) human insulin. Conditions: Capillary: 70 cm effective length, separation buffers: Inlet: 4.0% formic acid; Outlet/Sheath liquid: 4.0% formic acid with 20% methanol. Applied electric field strength: 285 V/cm (normal polarity); Injection: 5.0 psi / 20 sec. Detection: UV 214 nm (Panel A and C) and MS (Panel B and D). MS parameters: spray voltage: +2300 V; cone voltage: +30 V; desolvation gas flowrate: 600 L/h; desolvation temperature: 250°C; acquisition mode: MS (full scan) between 400 to 1000 (for peptides) and 700 to 2000 (for proteins) m/z.

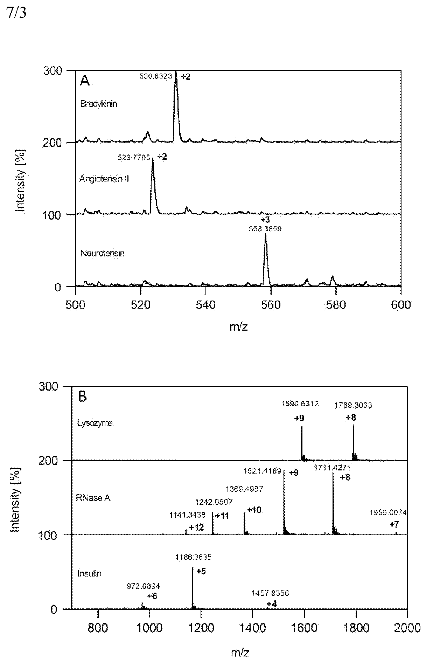

Figure 3: Mass spectra of the peptides and proteins separated in Figure 2. The 2⁺ charge state for bradykinin and angiotensin as well as the 3⁺ for neurotensin were clearly identifiable in the peptide MS spectra (panel A). In case of protein analysis, 8⁺ and 9⁺ charge states were detected for lysozyme, 8⁺ to 12⁺ for RNase A, while 3⁺ 4⁺ and 5⁺ for human insulin (panel B).

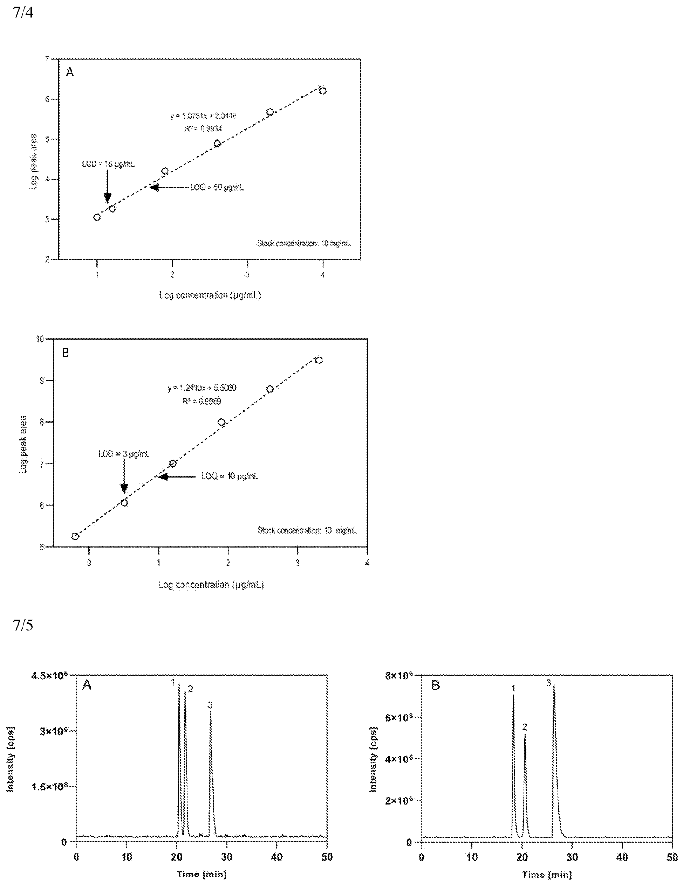

Figure 4: Detection linearity as well as LOD and LOQ determination for RNase A using CZE-UV (panel A) and CZE-CFRI-ESI-MS (panel B) detection modes.
Figure 5: Native capillary agarose gel electrophoresis analysis of a peptide (panel A) and protein (panel B) mixture with MS detection using the CFRI-ESI setting. Peaks: Panel A: (1) bradykinin, (2) angiotensin II, (3) neurotensin; Panel B: (1) lysozyme (2) RNase A and (3) insulin. Conditions: Effective capillary length 70 cm, gel-buffer: Inlet: 4.0% formic acid, 0.6% agarose and 20% glycerol; Outlet/Sheath liquid: 4.0% formic acid with 20% methanol. Applied electric field strength: 285 V/cm (normal polarity). Injection: 5.0 psi / 20 sec. MS parameters: spray voltage: +2300 V; cone voltage: +30 V; desolvation gas flowrate: 600 L/h; desolvation temperature: 250°C; acquisition mode: MS² (full scan) between 400 to 1000 m/z (for peptides) and 700 to 2000 m/z (for protein analysis).

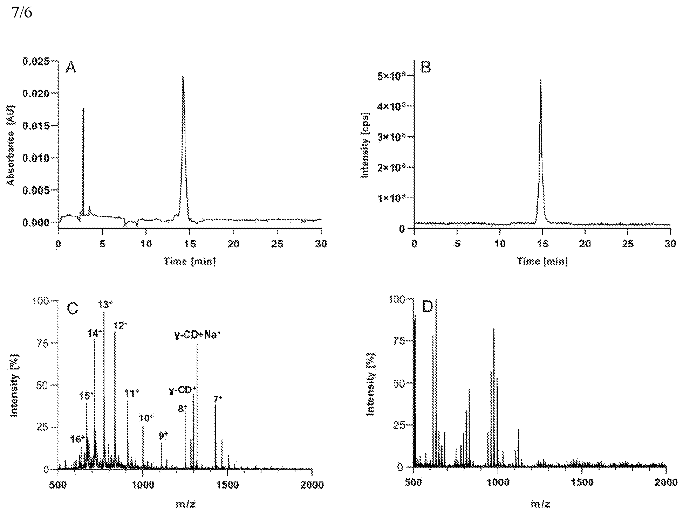

Figure 6: SDS-capillary agarose gel electrophoresis of a 10 kDa size protein standard with UV (A) and MS (B) detection as well as the resulting MS spectra with (C) and without (D) γ-cyclodextrin in the sheath liquid. Conditions: Effective capillary length 70 cm; Gel-buffer: Inlet: 4.0% formic acid, 0.6% agarose and 20% glycerol; Outlet/Sheath liquid: 4.0% formic acid with 20% methanol and 0.8% γ- cyclodextrin. Separation: 215 V/cm (reversed polarity, positive MS detection mode). Injection: 5.0 psi / 20 sec. MS parameters: spray voltage: +2300 V; cone voltage: +30 V; desolvation gas flowrate: 600 L/h; desolvation temperature: 250°C; acquisition mode: MS² (full scan) between 400 to 1000 m/z (for peptides) and 700 to 2000 m/z (for protein analysis).

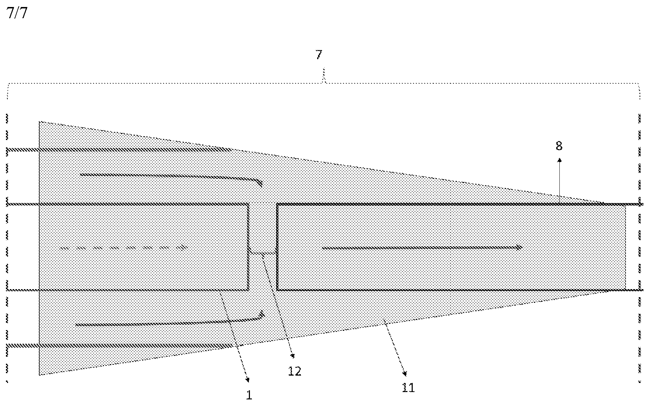

Figure 7: Schematic drawing of the connection between the separation capillary and the flow reactor

### Detailed description of preferred embodiments

In what follows, the invention is described in more detail with reference to Figure 1. Coupling capillary zone electrophoresis (CZE) and capillary gel electrophoresis (CGE) to a mass spectrometer via the Coaxial Flow Reactor Interface only required 1) a rugged bare fused silica separation capillary cut to size for analysis and filled with the corresponding buffer or gel for CZE and native- as well as SDS-CGE modes, 2) quickly insert the separation capillary into the coaxial interface part, and 3) connect to the commercial ESI source of the MS via the closed-circuit flow reactor tube in just a few minutes.

The bare fused silica (BFS) separation capillary 1 connected the inlet vial 2 of the electrically isolated capillary electrophoresis unit to the CFRI 3. This closed-circuit setup connected the outlet end of the coaxial sheath liquid tube of interface 3 and the ~2 mm protruding separation capillary 1 to the flow reactor 8 through a flexible PEEK tubing 11. Contact volume 12 is the space in the flexible PEEK tubing 11 between the separation capillary 1 and the flow reactor 8. The outlet reservoir 4 of the CE instrument (in our case a large-volume buffer reservoir) was filled with the sheath liquid and a capillary 5 was used for delivery a sufficient flow rate to maintain a stable spray at the other end of the setup, i.e. the electrospray capillary inside the commercial ESI source 10. Since the sheath liquid delivery tubing 5 was connected to the outlet reservoir 4 electrode of the CE instrument, it closed the CE electric circuit, and the ground was isolated by an isolation transformer 6 to avoid any excessive current flow to the MS power supply. The analyte molecules exiting the separation capillary 1 were carried downstream to the flow reactor 8 by the sheath liquid flow via the closed-circuit connection part 7 of the CFRI 3 and further into the ionization source 10 of the mass spectrometer. The nebulizer gas flow 9 of the ESI source 10 was carefully optimized not to cause any turbulences during the process.

Figure 1 shows the operation principle of CFRI, utilizing a continuous sheath liquid flow carrying the separated sample components from the outlet end of the CE separation capillary via the closed-circuit connection (also on Figure 7) of the flow reactor towards the commercial ESI sprayer. The aspiration rate of the MS nebulizer gas stream is optimized not to disrupt the laminar flow in the CFRI during the movement of the sample components to the ESI source via a short BFS capillary, enabling in this way a stable electrospray. Most importantly, the flow reactor allows special treatments e.g., inclusion complexation, adsorption, chemical reaction, etc., to take place after the fluid exits the separation capillary and before entering the MS unit.

We utilized this feature in our work to remove the surfactant during SDS-CGE-CFRI- ESI-MS analysis of a protein analyte by inclusion complexation of the SDS ingredient with γ- cyclodextrin.

### Examples

### Materials and Methods

*Chemicals.* Formic acid, water (HPLC grade), methanol, glycerol, Tris, ribonuclease A, lysozyme, angiotensin II, bradykinin, neurotensin and agarose (ultra-low gelling temperature), were purchased from Sigma Aldrich (St. Louis, MO, USA). Human Insulin (Humulin) was a kind gift from the Medical School of University of Debrecen (Debrecen, Hungary). The 10 kDa size protein standard and the SDS-MW sample buffer were from Bio-Science Kft (Budapest, Hungary). γ-cyclodextrin was kindly provided by the CycloLab Cyclodextrin Research and Development Laboratory Ltd. (Budapest, Hungary).

*Sample and gel preparation.* Peptides: angiotensin II, bradykinin and neurotensin were dissolved in HPLC grade water to a stock concentration of 10 mM each, then mixed and diluted with 4.0% formic acid to reach the final concentration of 100 µM. Proteins: 1.0 mg of RNase A and lysozyme were dissolved in HPLC grade water (stock solution of 10 mg/mL). For insulin, the content of the U-100 Humulin ampoule served as stock solution, with approximately 3.5 mg/mL concentration. The 10 kDa protein size standard was prepared by mixing 2 µL of standard solution with 80 µL of SDS-MW sample buffer and denatured by using the gradient temperature protocol developed earlier in our lab [29].

The low pH agarose-based native gel buffer system (pH 2.3) for CGE-UV and CGE-CFRI-ESI-MS consisted of 4% formic acid, 0.6% agarose and 20% glycerol. For the SDS-capillary agarose gel electrophoresis measurements, a Tris-acetate-EDTA (TAE) buffer was prepared containing 428 mM Tris base with 2 mM of EDTA·Na₂, followed by the addition of 10% (v/v) glycerol. The pH of the gel buffer system was adjusted to 7.0 with glacial acetic acid. Then, the ultra-low gelling temperature agarose was added to obtain 0.6 % (w/v) final concentration, stirred overnight at 75°C (250 RPM using a magnetic hotplate), followed by the addition of 0.1% (w/v) SDS and slowly mixed at room temperature (~100 RPM) for an additional hour to prevent foaming.

*CZE-, native CGE- and SDS-CGE with UV detection.* All separations were performed by using a CESI 8000 System (Beckman Coulter, Fullerton, CA) with a bare fused silica capillary (70 cm effective length, 80 cm total length, 50 µm ID/365 µm OD) and 214 nm UV detection.
- CZE separation buffer: Inlet: 4.0% formic acid, Outlet: 4.0% formic acid and 20% methanol. Applied electric field strength: 285 V/cm (normal polarity, anode at the injection side); Sample injection: 5.0 psi / 20 sec.
- Native CGE gel buffer system: Inlet and outlet reservoirs: 4% formic acid, 0.6% agarose and 20% (v/v) glycerol (pH 2.3). Applied electric field strength: 285 V/cm (normal polarity); Sample injection: 5.0 psi / 20 sec.
- SDS-CGE gel buffer system: Inlet and outlet reservoirs: 428 mM TAE, 10% (v/v) glycerol, 0.1% SDS and 0.6% agarose (pH 7.0). Applied electric field strength: 215 V/cm (reversed polarity, cathode at the injection side). Please note that in this instance, lower field strength was applied due to the higher conductivity of the acetate-based gel buffer system. Sample injection: 5.0 psi / 20 sec.

*CZE-, native CGE- and SDS-CGE via CFRI coupling with MS detection.* CZE-, native CGE- and SDS-CGE-CFRI-ESI-MS experiments were performed on the above-described capillary electrophoresis system connected to a Waters Xevo TQ-S triple quadrupole mass spectrometer (Milford, MA) via the Coaxial Liquid Sheath Flow Interface. The 70 cm long separation capillary was inserted into a modified OptiMS Capillary Cartridge (Beckman Coulter) with shortened tube length and cutoff protective housing, connected through the closed-circuit flow reactor extension to the commercial MS ESI sprayer of the unit (ESI/APCI/ESCI^{®} probe of a Waters Z-spray dual orthogonal API source) as shown in Figure 1.
- CZE/native CGE-CFRI-ESI-MS: Separation buffer: Inlet: 4.0 % formic acid for CZE-MS and 4.0 % formic acid, 0.6% agarose and 20% glycerol CGE-MS. Outlet: 4.0% formic acid and 20% methanol. Applied electric field strength: 285 V/cm (normal polarity); Sample injection: 5.0 psi / 20 sec.
- SDS-CGE-CFRI-MS: Separation buffers: Inlet: 428 TAE with 10% (v/v) glycerol, 0.1% SDS and 0.6% agarose (pH 7.0). Outlet: 4% formic acid, 20% methanol and 0.8% γ-cyclodextrin. Applied electric field strength: 215 V/cm (reversed polarity with positive MS detection mode). Sample injection: 5.0 psi / 20 sec.
- MS parameters: spray voltage: +2300 V; cone voltage: +30 V; desolvation gas flowrate: 600 L/h; desolvation temperature: 250°C; acquisition mode: MS2 (full scan) between 500 to 2000 m/z.

The CFRI device used in the examples is as follows: the BFS separation capillary (70 cm total length, 50 µm ID/365 µm OD) connected the inlet vial of the electrically isolated capillary electrophoresis unit to the CFRI. This closed-circuit setup connected the outlet end of the coaxial sheath liquid tube of interface and the ~2 mm protruding separation capillary to an 8 cm long 200 µm i.d./365 µm o.d. BFS capillary through a flexible peek tubing. The outlet reservoir of the CE instrument (in our case a large-volume buffer reservoir) was filled with the sheath liquid and a 70 cm long, 200 µm i.d./365 µm o.d. capillary was used for delivery at a minimum flow rate of 75 µL/min to maintain a stable spray at the other end of the setup, i.e., at the 150 µm i.d. stainless-steel electrospray capillary inside the commercial ESI source. Since the sheath liquid delivery tubing was connected to the outlet reservoir electrode of the CE instrument, it closed the CE electric circuit, and the ground was isolated by an isolation transformer to avoid any excessive current flow to the MS power supply.

A simple and generally applicable approach is disclosed for connecting capillary electrophoresis to mass spectrometric detection by introducing a Coaxial Flow Reactor Interface (CFRI). UV and MS detections were used under identical separation conditions in a comparative manner for peptide and protein analysis, both in CZE and CGE modes, to show the excellent potential of this approach. In SDS-CGE mode, inclusion complexation was utilized with gamma cyclodextrin in the sheath liquid to remove the SDS content from the sample and the background electrolyte in the flow reactor section before entering the MS unit, i.e., minimizing ion suppression. The dynamic range as well as limits of detection and quantification were also determined.

### Capillary zone electrophoresis of peptides and proteins with UV and CFRI-ESI-MS detection

Capillary electrophoresis coupled to electrospray ionization mass spectrometry offers a sensitive detection option with the additional structural information about the exact mass over charge values of the separated analyte molecules. To evaluate any possible separation efficiency loss due to the use of the coaxial flow reactor section of the interface, the CE-CFRI-ESI-MS approach was compared with conventional CE-UV detection using identical separation conditions, i.e., column length, running buffer composition, separation temperature as well as injection mode and applied electric field strengths. First, a mixture of three peptides was analyzed by CZE-UV and CZE- CFRI-ESI-MS (Figure 2, panels A and B, respectively) using a simple 4% formic acid BGE.

As Figure 2 exhibits, no significant differences were observed in the resulting electropherograms between the use of the two detection systems. All three peptides were well separated with both methods by using the same simple background electrolyte of 4.0% formic acid in the capillary and 4.0% formic acid with 20% methanol in the sheath liquid (Panels A and B). According to the numeric evaluation of the separation performance (resolution, peak efficiency, etc., detailed in Table S1), there were only minor differences between the two detection methods. The slightly longer migration time with the CFRI setup was due to the extra distance of the flow reactor between the capillary end and the MS orifice.

CZE analysis of the protein mixture of lysozyme, RNase A and insulin revealed similar results to the peptide separations. The test proteins were baseline resolved with good mass spectrometric identification. Here again, all separation performance values were very similar between the UV and CFRI-ESI-MS detection modes (Table S2).

The mass spectra extracted from the Total Ion Electropherograms (TIEs) in Figure 2 provided extra information in addition to the migration times of the separated analytes, as shown in Figure 3. Based on the collected MS spectra, the molecular masses and the migration order of the sample components were easily determined as 1060 Da (bradykinin, peak 1), 1046 Da (angiotensin II, peak 2) and 1673 Da (neurotensin, peak 3) for the peptides and ~14300 Da (lysozyme, peak 1), ~13700 Da (RNase A, peak 2) and ~5800 Da (insulin, peak 3) for the proteins. As one can observe, the 2⁺ charge state of bradykinin and angiotensin as well as the 3⁺ for neurotensin were clearly detectable in the peptide MS spectra (Figure 3 / panel A). Regarding the protein analysis part, 8⁺ and 9⁺ charge states were identified for lysozyme, 8⁺ to 12⁺ for RNase A, while 3⁺ 4⁺ and 5⁺ for human insulin (Figure 3 / panel B).

### Quantification with CFRI-MS

Ribonuclease A was used to compare the limit of detection (LOD) and limit of quantification (LOQ) with the UV and CFRI-ESI-MS settings, as well the detection linearity in the concentration range of 3.0 µg/mL to 10 mg/mL for CZE-UV and 0.6 µg/mL to 2.0 mg/mL for CZE-CFRI-ESI- MS. Five-fold dilutions were carried out starting from the 10 mg/mL concentration of the RNase A stock solution. Figure 4 compares the detection linearity plots of the two detection methods after injecting the serially diluted samples. The limit of detection (LOD) and limit of quantification (LOQ) were 15 and 50 µg/mL in case of CZE-UV setup, respectively, with the calibration plot covering ~3 orders of magnitude with good linearity (r2=0.993). The linear dynamic range was apparently similar for the CZE-CFRI-ESI-MS setting in a somewhat narrower concentration range but with slightly better linearity (r2=0.997). Here the LOD and LOQ values were 3 and 10 µg/mL (5 times better than with UV detection), respectively, corresponding well with the literature data of mass spectrometric detection of small intact proteins using a triple quadrupole instrument [30].

It is important to note that detection and quantification limits can be further optimized depending on the application and equipment used, since CFRI-ESI parameters can be easily adjusted (nitrogen flow rate, ESI voltage, flow reactor capillary diameters and lengths, etc.). In addition, the type and versatility of the MS instruments and acquisition methods applied are important too as all systems can use their own commercially available optimized electrospray setting.

### Native capillary agarose gel electrophoresis with MS detection using the coaxial flow reactor interface

The CFRI setting was next evaluated to accommodate native capillary gel electrophoresis separation of protein analytes. Figure 5 shows the TIEs of the separated peptides (panel A) and proteins (panel B) in 0.6% agarose gel filled capillaries.

As one can observe in Figure 5, the use of gel filled capillaries resulted in very steady baseline proving the high stability of the electrospray process with the CFRI setup. Most importantly, no gel components were detected in the MS spectra. Due to the sieving matrix in the separation capillary, sample components showed increased migration times (1.7x and 1.4x longer for peptides and proteins, respectively) and significantly enhanced resolution (from an average of 1.52 and 2.22 to 1.55 and 4.81 for peptides, and 1.45 and 1.67 to 2.48 and 3.24 for proteins as delineated in Tables S1-S4). Three consecutive separation runs were performed using the peptide and protein mixtures to compare the two detection methods, which demonstrated excellent migration time, peak area, resolution and theoretical plate number repeatability (see in Tables S1-S4, all less than 2.35% RSD) proving the robustness of the CGE-CFRI-ESI-MS approach. The marginal (up to ~12%) loss in resolution with the CFRI-ESI-MS detection system compared to UV detection was probably due to the laminar hydrodynamic flow mediated band broadening in the 8 cm long flow reactor part. The longer migration times (Tables S1-S4) obtained with the CFRI setting was also due to the additional flow reactor connection part. Please note that the effective capillary lengths (70 cm) and the applied electric field strengths (285 V/cm) were identical in both separation / detection methods.

### Sodium dodecyl sulfate capillary agarose gel electrophoresis with CFRI-ESI-MS detection

To take further advantage of this novel interface design, we evaluated the sodium dodecyl sulfate (SDS) - cyclodextrin (CD) inclusion complexation reaction in the flow reactor section during SDS- capillary agarose gel electrophoresis coupled to MS detection using a well characterized commercially available protein size standard (10 kDa). Following previous attempts to reduce SDS-mediated ionization suppression 31, we added γ-CD to the sheath liquid to utilize its hydrophobic cavity for inclusion complexation based capture of the SDS molecules by their hydrophobic tail. Since the resulting cyclodextrin-SDS inclusion complexes were not observed in the MS spectra, this approach readily enabled the long sought SDS-CGE of proteins with MS detection.

As Panels A and B in Figure 6 show, the separation performance of SDS capillary agarose gel electrophoresis was very similar between the use of UV and MS detection modes, with peak efficiencies of N=5140 and N=6737, respectively. More importantly, the capture of SDS molecules in the flow reactor section by the γ-CD in the sheath liquid during SDS-CGE-CFRI- ESI-MS significantly reduced SDS-induced ion suppression and the injected protein remained clearly detectable in positive ionization mode (Panel B). Intensities of the different protein charge states (7⁺ to 16⁺) were slightly lower (<15 %) as a result of the SDS removal process. Due to the addition of the cyclic oligosaccharide to the sheath liquid, γ-CD⁺ and γ-CD + Na⁺ adducts appeared in the spectrum at 1298 1320 m/z (Panel C). However, the characteristic charge states of the 10 kDa protein standard were barely identifiable without the addition of this macrocyclic additive. Please note that the characteristic charge states of the 10 kDa protein standard were barely identifiable without the addition of γ-CD to the sheath liquid, and the ion suppression caused by the SDS containing BGE was significant (Figure 6D). Most importantly, the SDS - γ-CD inclusion complexation in the closed-circuit flow reactor part of the interface adequately removed the SDS content from the system, allowing efficient electrospray and resulting in strong MS signal of the protein sample in SDS-CGE analysis.

**Table S1: Statistical evaluation and separation performance data of the UV and CFRI-ESI-MS detection signals of the test peptide mixture separated by capillary zone (CZE) electrophoresis**

| **Parameter** | **CZE-UV (4% FA)** | | | | | | **CZE-CFRI-ESI-MS (4% FA)** | | | | | |
|---|---|---|---|---|---|---|---|---|---|---|---|---|
| | **Run #1** | **Run #2** | **Run #3** | **Average** | **Std. Dev.** | **%RSD** | **Run #1** | **Run #2** | **Run #3** | **Average** | **Std. Dev.** | **%RSD** |
| **Bradykinin Mig. Time (min)** | 11,735 | 11,856 | 11,902 | 11,831 | 0,086 | 0,729 | 11,685 | 11,791 | 11,823 | 11,766 | 0,072 | 0,614 |
| **Angiotensin II Mig. Time (min)** | 13,226 | 13,351 | 13,403 | 13,327 | 0,091 | 0,683 | 13,186 | 13,212 | 13,344 | 13,247 | 0,085 | 0,640 |
| **Neurotensin Mig. Time (min)** | 15,573 | 15,612 | 15,670 | 15,618 | 0,049 | 0,313 | 15,741 | 15,801 | 15,863 | 15,802 | 0,061 | 0,386 |
| **Bradykinin Peak area** | 1091681 | 1080223 | 1103565 | 1091823 | 11672 | 1,069 | 2159213 | 2175562 | 2219984 | 2184920 | 31448 | 1,439 |
| **Angiotensin II Peak area** | 961224 | 955931 | 970317 | 962491 | 7276 | 0,756 | 1740586 | 1762165 | 1782234 | 1761662 | 20829 | 1,182 |
| **Neurotensin Peak Area** | 1259460 | 1235761 | 1268556 | 1254592 | 16931 | 1,349 | 1202844 | 1223561 | 1241335 | 1222580 | 19264 | 1,576 |
| **Resolution (Angiotensin II/Bradykinin)** | 1,634 | 1,656 | 1,681 | 1,657 | 0,023 | 1,406 | 1,527 | 1,521 | 1,508 | 1,519 | 0,010 | 0,630 |
| **Resolution (Neurotensin/Angiotensin II)** | 2,096 | 2,123 | 2,098 | 2,106 | 0,015 | 0,716 | 2,253 | 2,213 | 2,191 | 2,219 | 0,032 | 1,426 |
| **Efficiency (Bradykinin)** | 2449 | 2510 | 2481 | 2480 | 30,639 | 1,235 | 2315 | 2304 | 2350 | 2323 | 24,021 | 1,034 |
| **Efficiency (Angiotensin II)** | 3174 | 3156 | 3124 | 3151 | 25,128 | 0,797 | 3022 | 3007 | 3051 | 3027 | 22,368 | 0,739 |
| **Efficiency (Neurotensin)** | 3342 | 3321 | 3412 | 3358 | 47,627 | 1,418 | 3152 | 3140 | 3194 | 3162 | 28,355 | 0,897 |

**Table S2: Statistical evaluation and separation performance data of the UV and CFRI-ESI-MS detection signals of the test protein mixture separated by capillary zone (CZE) electrophoresis**

| **Parameter** | **CZE-UV (4% FA)** | | | | | | **CZE-CFRI-ESI-MS (4% FA)** | | | | | |
|---|---|---|---|---|---|---|---|---|---|---|---|---|
| | **Run #1** | **Run #2** | **Run #3** | **Average** | **Std. Dev.** | **%RSD** | **Run #1** | **Run #2** | **Run #3** | **Average** | **Std. Dev.** | **%RSD** |
| **Lysozyme Mig. Time (min)** | 12,831 | 12,758 | 12,698 | 12,762 | 0,067 | 0,522 | 13,246 | 13,361 | 13,408 | 13,338 | 0,083 | 0,625 |
| **RNase A Mig. Time (min)** | 15,176 | 15,254 | 15,352 | 15,261 | 0,088 | 0,578 | 15,503 | 15,442 | 15,641 | 15,529 | 0,102 | 0,657 |
| **Insulin Mig. Time (min)** | 18,099 | 18,335 | 18,201 | 18,212 | 0,118 | 0,650 | 19,421 | 19,397 | 19,632 | 19,483 | 0,129 | 0,664 |
| **Lysozyme Peak area** | 4097578 | 4044387 | 4152698 | 4098221 | 54158 | 1,322 | 5321519 | 5442665 | 5376894 | 5380359 | 60647 | 1,127 |
| **RNase A Peak area** | 3956621 | 3990918 | 4032556 | 3993365 | 38027 | 0,952 | 4916525 | 4953364 | 4872556 | 4914148 | 40456 | 0,823 |
| **Insulin Peak Area** | 5596544 | 5618593 | 5681972 | 5632370 | 44349 | 0,787 | 6360214 | 6299632 | 6395778 | 6351875 | 48612 | 0,765 |
| **Resolution (RNase A/Lysozyme)** | 1,634 | 1,620 | 1,638 | 1,631 | 0,009 | 0,580 | 1,452 | 1,441 | 1,450 | 1,448 | 0,006 | 0,398 |
| **Resolution (Insulin/RNase A)** | 1,731 | 1,737 | 1,722 | 1,730 | 0,008 | 0,436 | 1,667 | 1,670 | 1,671 | 1,669 | 0,002 | 0,128 |
| **Efficiency (Lysozyme)** | 1790 | 1790 | 1768 | 1783 | 12,702 | 0,713 | 1582 | 1610 | 1591 | 1594 | 14,295 | 0,897 |
| **Efficiency (RNase A)** | 1647 | 1638 | 1660 | 1648 | 11,060 | 0,671 | 1505 | 1512 | 1495 | 1504 | 8,544 | 0,568 |
| **Efficiency (Insulin)** | 1209 | 1209 | 1220 | 1213 | 6,351 | 0,524 | 1152 | 1161 | 1140 | 1151 | 10,536 | 0,915 |

**Table S3: Statistical evaluation and separation performance data of the UV and CFRI-ESI-MS detection signals of the test peptide mixture separated by capillary gel (CGE) electrophoresis**

| **Parameter** | **CGE-UV (4% FA, 0.6%A)** | | | | | | **CGE-CFRI-ESI-MS (4% FA, 0.6%A)** | | | | | |
|---|---|---|---|---|---|---|---|---|---|---|---|---|
| | **Run #1** | **Run #2** | **Run #3** | **Average** | **Std. Dev.** | **%RSD** | **Run #1** | **Run #2** | **Run #3** | **Average** | **Std. Dev.** | **%RSD** |
| **Bradykinin Mig. Time (min)** | 20,385 | 20,468 | 20,692 | 20,515 | 0,159 | 0,774 | 20,472 | 20,515 | 20,642 | 20,543 | 0,088 | 0,430 |
| **Angiotensin II Mig. Time (min)** | 21,561 | 21,647 | 21,762 | 21,657 | 0,101 | 0,466 | 21,669 | 21,713 | 21,799 | 21,727 | 0,066 | 0,304 |
| **Neurotensin Mig. Time (min)** | 26,688 | 26,715 | 26,873 | 26,759 | 0,100 | 0,373 | 26,791 | 26,869 | 26,987 | 26,882 | 0,099 | 0,367 |
| **Bradykinin Peak area** | 601556 | 603568 | 589123 | 598082 | 7824 | 1,308 | 1658215 | 1631226 | 1665568 | 1651670 | 18082 | 1,095 |
| **Angiotensin II Peak area** | 495681 | 481257 | 473255 | 483398 | 11365 | 2,351 | 1751823 | 1735681 | 1765981 | 1751162 | 15161 | 0,866 |
| **Neurotensin Peak Area** | 1025681 | 1002681 | 1035568 | 1021310 | 16874 | 1,652 | 1956874 | 1929554 | 1963582 | 1950003 | 18024 | 0,924 |
| **Resolution (Angiotensin II/Bradykinin)** | 1,674 | 1,659 | 1,692 | 1,675 | 0,017 | 0,986 | 1,572 | 1,551 | 1,513 | 1,545 | 0,030 | 1,937 |
| **Resolution (Neurotensin/Angiotensin II)** | 4,949 | 5,012 | 4,931 | 4,964 | 0,043 | 0,857 | 4,846 | 4,812 | 4,769 | 4,809 | 0,039 | 0,802 |
| **Efficiency (Bradykinin)** | 8015 | 8161 | 7994 | 8057 | 90,963 | 1,129 | 7948 | 7969 | 7897 | 7938 | 37,092 | 0,467 |
| **Efficiency (Angiotensin II)** | 6588 | 6785 | 6873 | 6749 | 145,933 | 2,162 | 6504 | 6532 | 6478 | 6505 | 27,010 | 0,415 |
| **Efficiency (Neurotensin)** | 7176 | 7099 | 7214 | 7163 | 58,592 | 0,818 | 7050 | 7019 | 7097 | 7055 | 39,299 | 0,557 |

**Table S4: Statistical evaluation and separation performance data of the UV and CFRI-ESI-MS detection signals of the test protein mixture separated by capillary gel (CGE) electrophoresis**

| **Parameter** | **CGE-UV (4% FA, 0.6%A)** | | | | | | **CGE-CFRI-ESI-MS (4% FA, 0.6%A)** | | | | | |
|---|---|---|---|---|---|---|---|---|---|---|---|---|
| | **Run #1** | **Run #2** | **Run #3** | **Average** | **Std. Dev.** | **%RSD** | **Run #1** | **Run #2** | **Run #3** | **Average** | **Std. Dev.** | **%RSD** |
| **Lysozyme Mig. Time (min)** | 18,252 | 18,144 | 18,215 | 18,204 | 0,055 | 0,302 | 18,291 | 18,312 | 18,484 | 18,362 | 0,106 | 0,577 |
| **RNase A Mig. Time (min)** | 20,403 | 20,310 | 20,540 | 20,418 | 0,116 | 0,567 | 20,603 | 20,634 | 20,712 | 20,650 | 0,056 | 0,272 |
| **Insulin Mig. Time (min)** | 25,707 | 25,625 | 25,943 | 25,758 | 0,165 | 0,641 | 26,363 | 26,423 | 26,655 | 26,480 | 0,154 | 0,582 |
| **Lysozyme Peak area** | 1864889 | 1885446 | 1855221 | 1868519 | 15436 | 0,826 | 2493212 | 2468556 | 2511235 | 2491001 | 21425 | 0,860 |
| **RNase A Peak area** | 1551213 | 1587332 | 1575214 | 1571253 | 18382 | 1,170 | 2315455 | 2356223 | 2314556 | 2328745 | 23801 | 1,022 |
| **Insulin Peak Area** | 5597435 | 5582998 | 5525778 | 5568737 | 37897 | 0,681 | 5884387 | 5851553 | 5701286 | 5812409 | 97625 | 1,680 |
| **Resolution (RNase A/Lysozyme)** | 2,586 | 2,545 | 2,562 | 2,564 | 0,020 | 0,796 | 2,473 | 2,452 | 2,501 | 2,475 | 0,025 | 0,994 |
| **Resolution (Insulin/RNase A)** | 3,338 | 3,301 | 3,341 | 3,327 | 0,022 | 0,667 | 3,203 | 3,251 | 3,268 | 3,241 | 0,034 | 1,047 |
| **Efficiency (Lysozyme)** | 9108 | 9025 | 9101 | 9078 | 46,033 | 0,507 | 9146 | 9020 | 9138 | 9101 | 70,550 | 0,775 |
| **Efficiency (RNase A)** | 8241 | 8218 | 8284 | 8248 | 33,501 | 0,406 | 8516 | 8502 | 8475 | 8498 | 20,841 | 0,245 |
| **Efficiency (Insulin)** | 2036 | 2006 | 2041 | 2028 | 18,930 | 0,934 | 2297 | 2237 | 2218 | 2251 | 41,235 | 1,832 |

### References

(1) Dawod, M.; Arvin, N. E.; Kennedy, R. T. Recent advances in protein analysis by capillary and microchip electrophoresis. Analyst 2017, 142 (11), 1847-1866. DOI: 10.1039/c7an00198c.
(2) Kasicka, V. Recent developments in capillary and microchip electro separations of peptides (2015-mid 2017). Electrophoresis 2018, 39 (1), 209-234. DOI: 10.1002/elps.201700295.
(3) Sarkozy, D.; Guttman, A. Capillary Sodium Dodecyl Sulfate Agarose Gel Electrophoresis of Proteins. Gels 2022, 8 (2). DOI: 10.3390/gels8020067.
(4) Maxwell, E. J.; Chen, D. D. Twenty years of interface development for capillary electrophoresis-electrospray ionization-mass spectrometry. Analytica chimica acta 2008, 627 (1), 25-33. DOI: 10.1016/j.aca.2008.06.034.
(5) Stolz, A.; Jooss, K.; Hocker, O.; Romer, J.; Schlecht, J.; Neususs, C. Recent advances in capillary electrophoresis-mass spectrometry: Instrumentation, methodology and applications. Electrophoresis 2019, 40 (1), 79-112. DOI: 10.1002/elps.201800331.
(6) Romer, J.; Montealegre, C.; Schlecht, J.; Kiessig, S.; Moritz, B.; Neususs, C. Online mass spectrometry of CE (SDS)-separated proteins by two-dimensional capillary electrophoresis. Analytical and bioanalytical chemistry 2019, 411 (27), 7197-7206. DOI: 10.1007/s00216-019-02102-8.
(7) Smith, R. D.; Udseth, H. R. Capillary zone electrophoresis-MS. Nature 1988, 331 (6157), 639-640. DOI: 10.1038/331639a0.
(8) Moini, M. Capillary electrophoresis-electrospray ionization mass spectrometry of amino acids, peptides, and proteins. Methods Mol Biol 2004, 276, 253-290. DOI: 10.1385/1-59259-798-X:253.
(9) Lee, E. D.; Muck, W.; Henion, J. D.; Covey, T. R. Liquid Junction Coupling for Capillary Zone Electrophoresis Ion Spray Mass-Spectrometry. Biomedical and Environmental Mass Spectrometry 1989, 18 (9), 844-850. DOI: DOI 10.1002/bms.1200190932.
(10) Yin, Y.; Li, G.; Guan, Y.; Huang, G. Sheathless interface to match flow rate of capillary electrophoresis with electrospray mass spectrometry using regular-sized capillary. Rapid Commun Mass Spectrom 2016, 30 Suppl 1, 68-72. DOI: 10.1002/rcm.7621.
(11) Issaq, H. J.; Janini, G. M.; Chan, K. C.; Veenstra, T. D. Sheathless electrospray ionization interfaces for capillary electrophoresis-mass spectrometric detection - Advantages and limitations. Journal of Chromatography A 2004, 1053 (1-2), 37-42. DOI: 10.1016/j.chroma.2004.08.116.
(12) Reinhoud, N. J.; Niessen, W. M. A.; Tjaden, U. R.; Gramberg, L. G.; Verheij, E. R.; van der Greef, J. Performance of a liquid-junction interface for capillary electrophoresis mass spectrometry using continuous-flow fast-atom bombardment. Rapid Communications in Mass Spectrometry 1989, 3 (10), 348- 351. DOI: https://doi.org/10.1002/rcm.1290031009.
(13) Wachs, T.; Sheppard, R. L.; Henion, J. Design and applications of a self-aligning liquid junction-electrospray interface for capillary electrophoresis-mass spectrometry. J Chromatogr B Biomed Appl 1996, 685 (2), 335-342. DOI: 10.1016/s0378-4347(96)00176-4.
(14) Foret, F.; Zhou, H.; Gangl, E.; Karger, B. L. Subatmospheric electrospray interface for coupling of microcolumn separations with mass spectrometry. Electrophoresis 2000, 21 (7), 1363-1371. DOI: 10.1002/(SICI)1522-2683(20000401)21:7<1363::AID-ELPS1363>3.0.CO;2-U.
(15) Ramautar, R.; Somsen, G. W.; de Jong, G. J. CE-MS for metabolomics: Developments and applications in the period 2016-2018. Electrophoresis 2019, 40 (1), 165-179. DOI: 10.1002/elps.201800323.
(16) Zhang, W.; Ramautar, R. CE-MS for metabolomics: Developments and applications in the period 2018- 2020. Electrophoresis 2021, 42 (4), 381-401. DOI: 10.1002/elps.202000203.
(17) Smith, R. D.; Barinaga, C. J.; Udseth, H. R. Improved Electrospray Ionization Interface for Capillary Zone Electrophoresis - Mass-Spectrometry. Analytical Chemistry 1988, 60 (18), 1948-1952. DOI: Doi 10.1021/Ac00169a022.
(18) Smith, A. D.; Moini, M. Control of electrochemical reactions at the capillary electrophoresis outlet/electrospray emitter electrode under CE/ESI-MS through the application of redox buffers. Anal Chem 2001, 73 (2), 240-246. DOI: 10.1021/ac0007940.
(19) Chao, B. F.; Chen, C. J.; Li, F. A.; Her, G. R. Sheathless capillary electrophoresis-mass spectrometry using a pulsed electrospray ionization source. Electrophoresis 2006, 27 (11), 2083-2090. DOI: 10.1002/elps.200500911.
(20) Fanali, S.; D'Orazio, G.; Foret, F.; Klepamik, K.; Aturki, Z. On-line CE-MS using pressurized liquid junction nanoflow electrospray interface and surface-coated capillaries. Electrophoresis 2006, 27 (23), 4666-4673. DOI: 10.1002/elps.200600322.
(21) Moini, M. Simplifying CE-MS operation. 2. Interfacing low-flow separation techniques to mass spectrometry using a porous tip. Anal Chem 2007, 79 (11), 4241-4246. DOI: 10.1021/ac0704560.
(22) Liu, C. C.; Alary, J. F.; Vollmerhaus, P.; Kadkhodayan, M. Design, optimisation, and evaluation of a sheath flow interface for automated capillary electrophoresis-electrospray-mass spectrometry. Electrophoresis 2005, 26 (7-8), 1366-1375. DOI: 10.1002/elps.200410133.
(23) Kohl, F. J.; Montealegre, C.; Neususs, C. On-line two-dimensional capillary electrophoresis with mass spectrometric detection using a fully electric isolated mechanical valve. Electrophoresis 2016, 37 (7-8), 954-958. DOI: 10.1002/elps.201500579.
(24) Muck, W. M.; Henion, J. D. Determination of Leucine Enkephalin and Methionine Enkephalin in Equine Cerebrospinal-Fluid by Microbore High-Performance Liquid-Chromatography and Capillary Zone Electrophoresis Coupled to Tandem Mass-Spectrometry. Journal of Chromatography-Biomedical Applications 1989, 495, 41-59. DOI: Doi 10.1016/50378-4347(00)82608-0.
(25) Bezy, V.; Chaimbault, P.; Morin, P.; Unger, S. E.; Bernard, M. C.; Agrofoglio, L. A. Analysis and validation of the phosphorylated metabolites of two anti-human immunodeficiency virus nucleotides (stavudine and didanosine) by pressure-assisted CE-ESI-MS/MS in cell extracts: sensitivity enhancement by the use of perfluorinated acids and alcohols as coaxial sheath-liquid make-up constituents. Electrophoresis 2006, 27 (12), 2464-2476. DOI: 10.1002/elps.200500850.
(26) Foret, F.; Thompson, T. J.; Vouros, P.; Karger, B. L.; Gebauer, P.; Bocek, P. Liquid Sheath Effects on the Separation of Proteins in Capillary Electrophoresis Electrospray Mass-Spectrometry. Analytical Chemistry 1994, 66 (24), 4450-4458. DOI: DOI 10.1021/ac00096a010.
(27) Gonzalez-Ruiz, V.; Codesido, S.; Far, J.; Rudaz, S.; Schappler, J. Evaluation of a new low sheath-flow interface for CE-MS. Electrophoresis 2016, 37 (7-8), 936-946. DOI: 10.1002/elps.201500523.
(28) Friese, O. V.; Smith, J. N.; Brown, P. W.; Rouse, J. C. Practical approaches for overcoming challenges in heightened characterization of antibody-drug conjugates with new methodologies and ultrahigh- resolution mass spectrometry. mAbs 2018, 10 (3), 335-345. DOI: 10.1080/19420862.2018.1433973.
(29) Szigeti, M.; Guttman, A. Sample Preparation Scale-Up for Deep N-glycomic Analysis of Human Serum by Capillary Electrophoresis and CE-ESI-MS. Molecular & cellular proteomics : MCP 2019, 18 (12), 2524- 2531. DOI: 10.1074/mcp.TIR119.001669.
(30) Wang, E. H.; Combe, P. C.; Schug, K. A. Multiple Reaction Monitoring for Direct Quantitation of Intact Proteins Using a Triple Quadrupole Mass Spectrometer. J Am Soc Mass Spectrom 2016, 27 (5), 886-896. DOI: 10.1007/s13361-016-1368-2.
(31) Quirino, J. P. Sodium dodecyl sulfate removal during electrospray ionization using cyclodextrins as simple sample solution additive for improved mass spectrometric detection of peptides. Analytica chimica acta 2018, 1005, 54-60. DOI: 10.1016/j.aca.2017.12.012.

## Claims

1. Coupled capillary electrophoresis - mass spectrometry (CE-MS) apparatus with improved precision, the apparatus comprising
- a device for performing capillary electrophoresis of a sample,
said device having a separation capillary (1) and with an end portion distant to the device, forming an outlet of the device
- a mass spectrometer equipped with an electrospray ionization source (10) forming an inlet of the mass spectrometer
wherein the separation capillary (1) and the electrospray ionization source (10) define a contiguous flow path for the sample to be separated and analyzed by the mass spectrometer;
the apparatus further comprising
- a sheath flow device (3) arranged in said flow path and extending along at least a portion of the length of the separation capillary (1), said sheath flow device (3) being configured to introduce a sheath fluid into the flow path at the end portion of said separation capillary (1);
- a flow reactor (8) arranged in said flow path downstream of the sheath flow device (3) and upstream of the electrospray ionization source (10), said flow reactor being configured to accommodate a reaction between at least one component of said sheath fluid and at least one component exiting the end portion of the separation capillary (1),
**characterized in that** the flow reactor (8) is connected to the separation capillary (1) through a non-conductive tubing (11), and the flow reactor (8) physically contacts only with the non-conductive tubing (11), not with the separation capillary (1).

2. Apparatus according to claim 1, wherein the capillary electrophoresis is capillary gel electrophoresis, capillary zone electrophoresis, capillary isoelectric focusing, capillary isotachophoresis and capillary electrochromatography, preferably capillary gel electrophoresis.

3. Apparatus according to claim 1 or 2, wherein the sheath fluid is a multicomponent fluid and/or wherein the sheath flow device (3) is a coaxial sheath flow device.

4. Apparatus according to any of claims 1 to 3, wherein the flow reactor (8) is a narrow bore flow reactor tube, preferably a bare fused silica capillary, and/or
the capillary volume of the flow reactor (8) is at least 100 nl, preferably at least 500 nl, more preferably at least 1000 nl, and/or
the flow reactor (8) is 1-30 cm, preferably 2-20 cm, more preferably 5-10 cm long capillary with 30-250 µm, preferably 100-200 µm internal diameter.

5. Apparatus according to any of claims 1 to 4, wherein the flow reactor (8) is an 8 cm long, 200 µm internal diameter 365 µm outer diameter bare fused silica capillary.

6. Apparatus according to any of claims 1 to 5, wherein the flow reactor (8) is connected to the separation capillary (1) through a non-conductive flexible tubing (11), preferably Polyether Ether Ketone (PEEK) tubing, and the flow reactor (8) physically contacts only with the non-conductive tubing (11), not with the separation capillary (1), wherein the distance between the separation capillary and the flow reactor is higher than about 0.05 mm and smaller than about 0.10 mm.

7. Process for separating and analyzing components of a sample, preferably peptides and/or proteins in CE-MS, the process comprising separating said components in a separation capillary of a capillary electrophoresis device, contacting the components exiting the separation capillary with a sheath fluid in a contact volume, then introducing said components together with the sheath fluid into the MS via a flow reactor, **characterized in that** the flow reactor is connected to the separation capillary through a non-conductive tubing, and the flow reactor physically contacts only with the non-conductive tubing, not with the separation capillary.

8. Process according to claim 7, which is performed in the apparatus according to any of claims 1 to 6.

9. Process according to claim 7 or 8, comprising contacting at least one component exiting the end portion of the separation capillary with at least one other component of the sheath fluid thereby performing a sample preparation step for the MS analysis.

10. Process according to claim 9, wherein the capillary electrophoresis is capillary gel electrophoresis, the at least one component exiting the end portion of the separation capillary is sodium dodecyl sulfate (SDS) and the at least one component of said sheath fluid is gamma cyclodextrin (γ-CD), and the sample preparation step forms a sodium dodecyl sulfate - gamma cyclodextrin (SDS - γ-CD) inclusion complex.

11. Process according to claim 10, wherein concentration of the γ-CD in the sheath liquid is 0,01-20 %, preferably 0,1-5 %, more preferably 0,8-2 %.

## Patentansprüche

1. Gekoppelte Kapillarelektrophorese-Massenspektrometrie (CE-MS)-Vorrichtung mit verbesserter Präzision, wobei die Vorrichtung Folgendes umfasst:
- eine Vorrichtung zur Durchführung der Kapillarelektrophorese einer Probe,
wobei die Vorrichtung eine Trennkapillare (1) mit einem von der Vorrichtung entfernten Endabschnitt aufweist, der den Auslass der Vorrichtung bildet;
- ein Massenspektrometer, das mit einer Elektrospray-Ionisationsquelle (10) ausgestattet ist, welche den Einlass des Massenspektrometers bildet;
wobei die Trennkapillare (1) und die Elektrospray-Ionisationsquelle (10) einen zusammenhängenden Strömungsweg für die zu trennende und vom Massenspektrometer zu analysierende Probe bilden;
die Vorrichtung ferner umfassend:
- eine Hüllströmungsvorrichtung (3), die in dem Strömungsweg angeordnet ist und sich über mindestens einen Teil der Länge der Trennkapillare (1) erstreckt, die Hüllströmungsvorrichtung (3) ist so konfiguriert, dass sie am Endabschnitt der Trennkapillare (1) eine Hüllflüssigkeit in den Strömungsweg einleitet;
- ein Strömungsreaktor (8), der im Strömungsweg stromabwärts der Mantelströmungsvorrichtung (3) und stromaufwärts der Elektrospray-Ionisationsquelle (10) angeordnet ist und so konfiguriert ist, dass er eine Reaktion zwischen mindestens einer Komponente der Hüllflüssigkeit und mindestens einer Komponente, die aus dem Endabschnitt der Trennkapillare (1) austritt, ermöglicht,
**dadurch gekennzeichnet, dass** der Strömungsreaktor (8) über einen nichtleitenden Schlauch (11) mit der Trennkapillare (1) verbunden ist und der Strömungsreaktor (8) nur mit dem nichtleitenden Schlauch (11), nicht aber mit der Trennkapillare (1) in physischem Kontakt steht.

2. Vorrichtung nach Anspruch 1, wobei es sich bei der Kapillarelektrophorese um Kapillargelelektrophorese, Kapillarzonenelektrophorese, isoelektrische Fokussierung, Isotachophorese oder Kapillarelektrochromatographie, vorzugsweise um Kapillargelelektrophorese handelt.

3. Vorrichtung nach Anspruch 1 oder 2, wobei es sich bei der Hüllflüssigkeit um eine Mehrkomponentenflüssigkeit handelt und/oder die Hüllströmungsvorrichtung (3) eine koaxiale Hüllströmungsvorrichtung ist.

4. Vorrichtung nach einem der Ansprüche 1 bis 3, wobei der Strömungsreaktor (8) ein Strömungsreaktorrohr mit engem Innendurchmesser, vorzugsweise eine blanke Quarzglaskapillare, ist und/oder
das Kapillarvolumen des Strömungsreaktors (8) mindestens 100 nl, vorzugsweise mindestens 500 nl, besonders bevorzugt mindestens 1000 nl beträgt und/oder
der Strömungsreaktor (8) eine 1-30 cm, vorzugsweise 2-20 cm, besonders bevorzugt 5-10 cm lange Kapillare mit einem Innendurchmesser von 30-250 µm, vorzugsweise 100-200 µm ist.

5. Vorrichtung nach einem der Ansprüche 1 bis 4, wobei der Strömungsreaktor (8) eine 8 cm lange, blanke Quarzglaskapillare mit einem Innendurchmesser von 200 µm und einem Außendurchmesser von 365 µm ist.

6. Vorrichtung nach einem der Ansprüche 1 bis 5, wobei der Strömungsreaktor (8) über einen nichtleitenden, flexiblen Schlauch (11), vorzugsweise aus Polyetheretherketon (PEEK), mit der Trennkapillare (1) verbunden ist und der Strömungsreaktor (8) nur mit dem nichtleitenden Schlauch (11) und nicht mit der Trennkapillare (1) in Kontakt steht, wobei der Abstand zwischen der Trennkapillare und dem Strömungsreaktor größer als etwa 0,05 mm und kleiner als etwa 0,10 mm ist.

7. Verfahren zur Trennung und Analyse von Probenbestandteilen, vorzugsweise Peptiden und/oder Proteinen, mittels CE-MS, wobei das Verfahren die Trennung der Bestandteile in einer Trennkapillare eines Kapillarelektrophoresegeräts, das Inkontaktbringen der aus der Trennkapillare austretenden Bestandteile mit einer Hüllflüssigkeit in einem Kontaktvolumen und das anschließende Einleiten der Bestandteile zusammen mit der Hüllflüssigkeit in das MS über einen Durchflussreaktor umfasst, **dadurch gekennzeichnet, dass** der Durchflussreaktor über einen nichtleitenden Schlauch mit der Trennkapillare verbunden ist und der Durchflussreaktor nur mit dem nichtleitenden Schlauch, nicht aber mit der Trennkapillare physisch in Kontakt steht.

8. Verfahren nach Anspruch 7, das in der Vorrichtung nach einem der Ansprüche 1 bis 6 durchgeführt wird.

9. Verfahren nach Anspruch 7 oder 8, umfassend das Inkontaktbringen mindestens einer Komponente, die aus dem Endabschnitt der Trennkapillare austritt, mit mindestens einer anderen Komponente der Hüllflüssigkeit, wodurch ein Probenvorbereitungsschritt für die MS-Analyse durchgeführt wird.

10. Verfahren nach Anspruch 9, wobei es sich bei der Kapillarelektrophorese um eine Kapillargelelektrophorese handelt, die mindestens eine Komponente, die aus dem Endabschnitt der Trennkapillare austritt, Natriumdodecylsulfat (SDS) und die mindestens eine Komponente der Hüllflüssigkeit Gamma-Cyclodextrin (γ-CD) ist und der Probenvorbereitungsschritt einen Natriumdodecylsulfat-Gamma-Cyclodextrin-(SDS-γ-CD)-Einschlusskomplex bildet,

11. Verfahren nach Anspruch 10, wobei die Konzentration des γ-CD in der Hüllflüssigkeit 0,01-20%, vorzugsweise 0,1-5%, besonders bevorzugt 0,8-2% beträgt.

## Revendications

1. Appareil couplé d'électrophorèse capillaire et de spectrométrie de masse (CE-MS) à précision améliorée, l'appareil comprenant :
- un dispositif destiné à réaliser une électrophorèse capillaire d'un échantillon,
ledit dispositif comportant un capillaire de séparation (1) et une partie d'extrémité, éloignée du dispositif, formant une sortie du dispositif ;
- un spectromètre de masse équipé d'une source d'ionisation par électropulvérisation (10) formant une entrée du spectromètre de masse ;
- dans lequel le capillaire de séparation (1) et la source d'ionisation par électropulvérisation (10) définissent un trajet d'écoulement contigu pour l'échantillon à séparer et à analyser par le spectromètre de masse ;
l'appareil comprenant en outre :
- un dispositif à écoulement de gaine (3) agencé dans ledit trajet d'écoulement et s'étendant le long d'au moins une partie de la longueur du capillaire de séparation (1), ledit dispositif à écoulement de gaine (3) étant configuré pour introduire un fluide de gaine dans le trajet d'écoulement au niveau de la partie d'extrémité dudit capillaire de séparation (1);
- un réacteur d'écoulement (8) agencé dans ledit trajet d'écoulement en aval du dispositif à écoulement de gaine (3) et en amont de la source d'ionisation par électropulvérisation (10), ledit réacteur d'écoulement étant configuré pour recevoir une réaction entre au moins un composant dudit fluide de gaine et au moins un composant sortant de la partie d'extrémité du capillaire de séparation (1),
**caractérisé en ce que** le réacteur d'écoulement (8) est raccordé au capillaire de séparation (1) par l'intermédiaire d'un tube non conducteur (11), et **en ce que** le réacteur d'écoulement (8) est en contact physique uniquement avec le tube non conducteur (11), et non avec le capillaire de séparation (1).

2. Appareil selon la revendication 1, dans lequel l'électrophorèse capillaire est une électrophorèse capillaire sur gel, une électrophorèse capillaire de zone, une focalisation isoélectrique capillaire, une isotachophorèse capillaire et une électrochromatographie capillaire, de préférence une électrophorèse capillaire sur gel.

3. Appareil selon la revendication 1 ou 2, dans lequel le fluide de gaine est un fluide multicomposant et/ou dans lequel le dispositif à écoulement de gaine (3) est un dispositif à écoulement de gaine coaxial.

4. Appareil selon l'une quelconque des revendications 1 à 3, dans lequel le réacteur d'écoulement (8) est un tube de réacteur d'écoulement à alésage étroit, de préférence un capillaire nu en silice fondue, et/ou
dans lequel le volume capillaire du réacteur d'écoulement (8) est d'au moins 100 nl, de préférence d'au moins 500 nl, plus préférablement d'au moins 1000 nl, et/ou
dans lequel le réacteur d'écoulement (8) est un capillaire d'une longueur de 1 à 30 cm, de préférence de 2 à 20 cm, plus préférablement de 5 à 10 cm, ayant un diamètre interne de 30 à 250 µm, de préférence de 100 à 200 µm.

5. Appareil selon l'une quelconque des revendications 1 à 4, dans lequel le réacteur d'écoulement (8) est un capillaire nu en silice fondue d'une longueur de 8 cm, ayant un diamètre interne de 200 µm et un diamètre externe de 365 µm.

6. Appareil selon l'une quelconque des revendications 1 à 5, dans lequel le réacteur d'écoulement (8) est raccordé au capillaire de séparation (1) par l'intermédiaire d'un tube flexible non conducteur (11), de préférence un tube en polyétheréthercétone (PEEK), et dans lequel le réacteur d'écoulement (8) est en contact physique uniquement avec le tube non conducteur (11), et non avec le capillaire de séparation (1), la distance entre le capillaire de séparation et le réacteur d'écoulement étant supérieure à environ 0,05 mm et inférieure à environ 0,10 mm.

7. Procédé de séparation et d'analyse de composants d'un échantillon, de préférence de peptides et/ou de protéines en CE-MS, le procédé comprenant la séparation desdits composants dans un capillaire de séparation d'un dispositif d'électrophorèse capillaire, la mise en contact des composants sortant du capillaire de séparation avec un fluide de gaine dans un volume de contact, puis l'introduction desdits composants avec le fluide de gaine dans le spectromètre de masse via un réacteur d'écoulement,
**caractérisé en ce que** le réacteur d'écoulement est raccordé au capillaire de séparation par l'intermédiaire d'un tube non conducteur, et **en ce que** le réacteur d'écoulement est en contact physique uniquement avec le tube non conducteur, et non avec le capillaire de séparation.

8. Procédé selon la revendication 7, lequel est mis en œuvre dans l'appareil selon l'une quelconque des revendications 1 à 6.

9. Procédé selon la revendication 7 ou 8, comprenant la mise en contact d'au moins un composant sortant de la partie d'extrémité du capillaire de séparation avec au moins un autre composant du fluide de gaine, réalisant ainsi une étape de préparation d'échantillon pour l'analyse par spectrométrie de masse.

10. Procédé selon la revendication 9, dans lequel l'électrophorèse capillaire est une électrophorèse capillaire sur gel, l'au moins un composant sortant de la partie d'extrémité du capillaire de séparation est le dodécylsulfate de sodium (SDS) et l'au moins un composant dudit fluide de gaine est la gamma-cyclodextrine (γ-CD), et dans lequel l'étape de préparation d'échantillon forme un complexe d'inclusion dodécylsulfate de sodium - gamma-cyclodextrine (SDS-γ-CD).

11. Procédé selon la revendication 10, dans lequel la concentration en γ-CD dans le fluide de gaine est de 0,01 à 20 %, de préférence de 0,1 à 5 %, plus préférablement de 0,8 à 2 %.
